# EUROPÄISCHE PATENTSCHRIFT

(11) **EP 1 576 029 B1**
(45) Veröffentlichungstag und Bekanntmachung des Hinweises auf die Patenterteilung: **06.06.2012**
(21) Anmeldenummer: 03772277.4
(22) Anmeldetag: 30.10.2003
(51) Int. Cl.: C08G 65/332, C08G 65/26

(54) **STYROLOXIDHALTIGE COPOLYMERE UND DEREN VERWENDUNG ALS EMULGATOREN UND DISPERGIERMITTEL**
COPOLYMERS CONTAINING STYRENE OXIDE AND USE THEREOF AS EMULSIFIERS AND DISPERSING AGENTS
COPOLYMERES CONTENANT DE L'OXYDE DE STYRENE ET LEUR UTILISATION EN TANT QU'EMULSIFIANT ET AGENT DISPERSANT

(30) Priorität: 12.11.2002 DE 10252452
(43) Veröffentlichungstag der Anmeldung: 21.09.2005
(73) Patentinhaber: Clariant Produkte (Deutschland) GmbH, 65929 Frankfurt am Main (DE)
(72) Erfinder: PÖLLMANN, Klaus, 84489 Burghausen (DE); GLOS, Martin, 84453 Mühldorf (DE); STRASSER, Anton, 84503 Altötting (DE); KRÄMER, Eckart, 65187 Wiesbaden (DE)
(86) Internationale Anmeldenummer: PCT/EP2003/012043
(87) Internationale Veröffentlichungsnummer: WO 2004/044035

(56) Entgegenhaltungen:
- EP-A- 0 940 406
- DATABASE CA [Online] CHEMICAL ABSTRACTS SERVICE, COLUMBUS, OHIO, US; GOTA, TETSUYA ET AL: "Emulsifiers for water-in-oil emulsion polymerization and dispersants for suspension polymerization" retrieved from STN Database accession no. 137:63636 XP002267309 -& JP 2002 179712 A (ASAHI DENKA KOGYO K. K., JAPAN) 26. Juni 2002 (2002-06-26)
- DATABASE CA [Online] CHEMICAL ABSTRACTS SERVICE, COLUMBUS, OHIO, US; FUJIMOTO, TAKEHIKO ET AL: "Surfactants" retrieved from STN Database accession no. 84:181896 XP002267310 -& JP 49 049198 B (SANYO CHEMICAL INDUSTRIES LTD., JAPAN) 25. Dezember 1974 (1974-12-25)
- DATABASE CA [Online] CHEMICAL ABSTRACTS SERVICE, COLUMBUS, OHIO, US; MORIYAMA, NOBORU ET AL: "Regeneration of the degraded oil-in-water-type ultra-heavy fuel oil emulsions" retrieved from STN Database accession no. 115:186616 XP002267387 -& JP 03 097785 A (KAO CORP., JAPAN;MITSUBISHI HEAVY INDUSTRIES, LTD.) 23. April 1991 (1991-04-23)

## Beschreibung

Die vorliegende Erfindung betrifft nichtionische und anionische Emulgatoren für Pigmente, Bitumen und die Emulsionspolymerisation, welche Copolymere aus Alkylenoxiden und Styroloxid enthalten.

Die für die Dispergierung von Bitumen und Pigmente oder die Emulsionspolymerisation nach dem Stand der Technik eingesetzten Emulgatoren sind zumeist anionische und nichtionische Emulgatoren.

Übliche anionische Emulgatoren sind Natrium-, Kalium- und Ammoniumsalze von Fettsäuren, Natriumalkylbenzolsulfonate, Natriumalkylsulfonate, Natriumolefinsulfonate, Natriumpolynaphthalensulfonate, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und Monoalkylpolyoxethylsulfosuccinate, sowie Alkylpolyethylenglykol-etherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze.

Als nichtionische Emulgatoren werden üblicherweise Alkylphenolpolyethylenglykolether, Alkylpolyethylenglykolether, Fettsäurepolyethylenglykolether, Ethylen/Propylenglykol-Blockpolymere und Sorbitanesterpolyethylenglykolether eingesetzt.

Sehr gute Emulgiereigenschaften können im Allgemeinen durch die Verwendung von Ethylenoxid/Propylenoxidpolymeren mit Nonylphenolen als hydrophobe Kopfgruppe erreicht werden. WO 00/04096 offenbart die Anwendung solcher Nonylphenolalkoxylate als Dispergiermittel für Bitumenemulsionen. Da die Nonylphenolgruppe jedoch aufgrund ihrer ungünstigen ökotoxikologischen Eigenschaften in Verruf geraten ist, werden Alternativen dazu gesucht.

EP-A-0 403 718 offenbart Alkylether-Styroloxid-Alkoxylate mit je einer endständigen Alkylether-Styroloxideinheit an der Polyalkoxylatkette.

EP-A-1 078 946 offenbart C₈-C₁₃-Alkylether-Styroloxidalkoxylate.

Beide Anmeldungen offenbaren Copolymere mit einer bis maximal zwei Einheiten Styroloxid und deren Verwendung in nichtreaktiven/nicht copolymerisierbaren Systemen.

Insbesondere im Bereich der Emulsionspolymerisation haben in der jüngeren Vergangenheit copolymerisierbare Emulgatoren, also solche, die eine Doppelbindung aufweisen, die bei einer radikalischen Polymerisation reagieren kann, besonderes Interesse erlangt.

J.Polym.Sci., 30 (1992) 2619 - 2629 und J.Polym.Sci., 31 (1993) 1403 - 1415 beschreiben z.B. die Verwendung von Natriumdodecylallylsulfosuccinat als copolymerisierbarer Emulgator in der Emulsionspolymerisation von Vinylacetat.

EP-A-050 166 beschreibt wässrige Polymerdispersionen, die durch Emulsionspolymerisation unter Verwendung von radikalisch polymerisierbaren Emulgatoren hergestellt wurden.

EP-A-0 472 837 beschreibt (1-Propenyl)-alkylphenolethoxylate als Emulgatoren zur Emulsionspolymerisation.

EP-A-0 464 454 beschreibt Schwefelsäureester der (1-Propenyl)-alkylphenolethoxylate als Emulgatoren zur Emulsionspolymerisation. EP-A-0 940 406 betrifft Phosphorsäureester,
a) welche durch Umsetzung eines ω-hydroxyfunktionellen Oligo- oder Poly(alkyl)styrols mit eine Alkylenoxid zu einem Poly(alkyl)styrol-block(b)-Polyalkylenoxid-Copolymeren und anschließender Überführung in die entsprechenden Phosphorsäureester mit einer phosphorsäureesterbildenden Phosphorverbindung erhältlich sind, wobei bis zu 100 % der terminalen Hydroxylgruppen dieser Poly(alkyl)styrol-block(b)-Polyalkylenoxid-Copolymeren zu Phosphorsäureestergruppen umgesetzt werden und die Phosphoratome, abhängig von den gewählten stöchiometrischen Verhältnissen, ein und/oder zweifach verestert werden, oder
b) basierend auf Polystyroloxid-block(b)-Polyalkylenoxid-Copolymeren, welche ausgehend von einem monofunktionellen Startalkohol durch sequentielle Anlagerung von Styroloxid und einem Alkylenoxid gemäß der gewünschten Abfolge und Kettenlänge der einzelnen Segmente erhältlich sind und nachfolgend zu den entsprechenden Phosphorsäureestern, wie in a) beschriebener Weise, umgesetzt werden,
sowie die Herstellung dieser Phosphorsäureester und ihre Verwendung als Dispergiermittel für Pigmente und Füllstoffe.

JP-A-2002179712 offenbart Emulgatoren für W/O-Emulsionen, die der Formel

R'-O- (AO)ₙ - X

entsprechen, worin
- R': eine lineare, sekundäre oder verzweigte Alkyl- oder Alkenylgruppe, eine Phenylgruppe oder einer Alkylphenylgruppe mit 1 bis 26 Kohlenstoffatomen,
- A: mindestens für zwei Gruppen ausgewählt aus Ethylen-, Propylen-, Butylen- und Styrengruppen, ausgenommen die Kombination aus Ethylen- und Butylengruppen,
- X: eine anionische hydrophile Gruppe, und
- n: eine Zahl von 2 bis 200
bedeuten.

JP-B-49049198 offenbart oberflächenaktive Mittel, welche Polyoxyethylen-Polyoxyphenylethylen-Methylether umfassen und ihre Verwendung als Emulgatoren für Agrochemikalien und Petroleumharze.

JP-A-3097785 offenbart Demulgatoren für ÖI/Wasser-Emulsionen in Pipelines. Die Demulgatoren enthalten ein kationisches oder amphoteres Tensid, ausgewählt aus C₄- bis C₁₈-Alkyl- oder -Alkenyl quartären Ammoniumsalzen, Alkylbetainen, Alkylaminoxiden, Polyamiden, Imidazolinen und Sulfobetainen. Die Demulgatoren enthalten ein nichtionisches Tensid ausgewählt aus Alkylenoxidaddukten an Phenole, Phenol-Formaldehydkondensate, C₂- bis C₅-aliphatische Alkohole oder Fettamine, Styroloxid, mehrwertige C₈-C₁₈-Alkohol-Fettsäureester, Polyamine und Triglyceride.

Aufgabe der vorliegender Erfindung war es daher, Ersatzstoffe für Nonylphenolalkoxylate mit hervorragenden Emulgier- und Dispergiereigenschaften zu finden, die sowohl in nichtpolymerisierbarer Form als auch in polymerisierbarer Form leicht zur Verfügung gestellt werden können, und die in ihrer Molekülstruktur einfach und flexibel an das jeweils zu dispergierende Medium angepasst werden können.

Es wurde nun gefunden, dass mit Copolymeren aus Alkylenoxiden und Styroloxid hervorragende Dispergiereigenschaften erreicht werden können. Im Bereich Pigment- und Bitumendispersionen können dabei insbesondere nichtreaktive Copolymere mit mehreren kondensierten Einheiten Styroloxid eingesetzt werden. Im Bereich der Emulsionspolymerisation können Vinylether- oder Allylether-Polystyroloxidalkoxylate als copolymerisierbare Emulgatoren eingesetzt werden.

Gegenstand der Erfindung sind daher Copolymere der Formel (1) 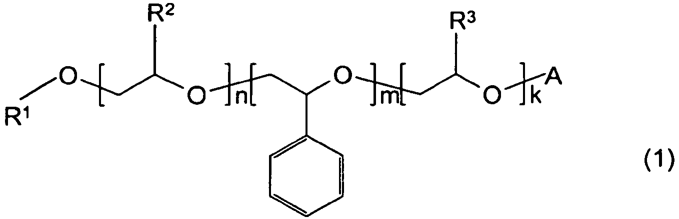 worin
- R¹: Wasserstoff, einen C₁-C₅-Alkylrest oder C₂-C₅-Alkenylrest, die auch Heteroatome enthalten können, eine Säuregruppe oder eine aliphatische oder aromatische Gruppe mit 1 bis 50 Kohlenstoffatomen, die eine Säuregruppe trägt,
- R² und R³: unabhängig voneinander Wasserstoff, Methyl und/oder Ethyl
- n: eine Zahl von 0 bis 100, und
- m: eine Zahl von 3 bis 30, und
- k: eine Zahl von 1 bis 200, und
- A: eine Copolymereinheit der Formel (2) 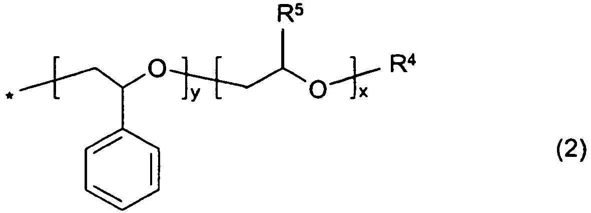
worin
- R⁴: Wasserstoff, einen C₁-C₅-Alkylrest oder C₂-C₅-Alkenylrest, die auch Heteroatome enthalten können, eine Säuregruppe oder eine aliphatische oder aromatische Gruppe mit 1 bis 50 Kohlenstoffatomen, die eine Säuregruppe trägt,
- R⁵: Wasserstoff, Methyl und/oder Ethyl
- x: eine Zahl von 0 bis 100, und
- y: eine Zahl von 3 bis 30,
bedeuten, wobei R¹ für Wasserstoff oder eine Säuregruppe steht.

Ein weiterer Gegenstand der Erfindung ist ein Verfahren zur Durchführung einer Emulsionspolymerisation, indem man dem zu polymerisierenden Reaktionsgemisch die erfindungsgemäßen Copolymere zusetzt.

Ein weiterer Gegenstand der Erfindung ist ein Verfahren zur Herstellung von Polymerdispersionen, indem man die erfindungsgemäßen Copolymere mit olefinisch ungesättigten Monomeren in wässriger Phase polymerisiert, sowie die so herstellbare wässrige Polymerdispersion.

Ein weiterer Gegenstand der Erfindung ist ein Verfahren zur Dispergierung von

Pigmenten oder Bitumen, indem man den Pigmenten oder dem Bitumen die erfindungsgemäßen Copolymere zusetzt.

Ein weiterer Gegenstand der Erfindung ist die Verwendung der erfindungsgemäßen Copolymere als Emulgatoren in der Emulsionspolymerisation oder als Pigment- und Bitumenemulgator.

Werden die erfindungsgemäßen Copolymere als Emulgatoren in der Emulsionspolymerisation verwendet, dann enthalten sie eine olefinische Doppelbindung. In diesem Fall bedeuten R¹ oder R⁴ eine C₂- bis C₅-Alkenylgruppe.

Die repetitiven Struktureinheiten in Formel 1 und 2 können statistisch oder blockweise angeordnet sein. In einer bevorzugten Ausführungsform der Erfindung handelt es sich bei den erfindungsgemäßen Copolymeren um solche Alkoxylate, deren Alkoxygruppen blockweise angeordnet sind.

k bedeutet in einer bevorzugten Ausführungsform eine Zahl von 10 bis 100,

m bedeutet in einer bevorzugten Ausführungsform eine Zahl von 3 bis 10.

n bedeutet in einer bevorzugten Ausführungsform eine Zahl von 1 bis 5.

In einer bevorzugten Ausführungsform der Erfindung steht die Formel 1 für einen Ester oder Teilester. Beispiele anorganischer Säuren, die zur Bildung der erfindungsgemäßen Teilester geeignet sind und von denen R⁴ oder R¹ sich ableiten können, sind Schwefelsäure und Phosphorsäure. Kommt Phosphorsäure zur Verwendung, so können die erfindungsgemäßen Teilester entweder Monoester oder Diester der Phosphorsäure sein.

In einer bevorzugten Ausführungsform sind die zur Veresterung der Copolymere gemäß Formel 1 verwendeten organischen oder anorganischen Säuren ein-, zwei- oder dreiwertig.

Bei den organischen Säuren handelt es sich in einer bevorzugten Ausführungsform um ein-, zwei-, drei- oder mehrwertige Carbonsäuren. Bei einwertigen Säuren handelt es sich bevorzugt um ungesättigte Carbonsäure wie z.B. Acrylsäure, Methacrylsäure, Crotonsäure, Itaconsäure, Maleinsäure oder Fumarsäure. Bei zwei-, drei-, oder mehrwertigen Carbonsäure handelt es sich um Verbindungen, die 2, 3 oder mehr Carboxylgruppen enthalten und die darüber hinaus noch mindestens eine schwefel- oder phosphorhaltige funktionelle Gruppe aufweisen können. Besonders bevorzugt sind schwefelhaltige funktionelle Gruppen, speziell Sulfonatgruppen.

Die besonders bevorzugten Sulfonsäuren/Sulfonate können aliphatische oder aromatische Verbindungen sein. Bevorzugte Sulfonsäuren/Sulfonate enthalten 2 oder 3 Carboxylgruppen, und unter Einschluss der Carboxylgruppen, 3 bis 6 Kohlenstoffatome. Eine besonders bevorzugte Sulfonsäure ist die Sulfobernsteinsäure.

Bei den Sulfon- und Carbonsäuren handelt es sich in einer bevorzugten Ausführungsform um aromatische oder aliphatische Verbindungen die eine oder mehrere Säurefunktionen tragen.

Besonders bevorzugte Ester, Teilester und Säure-Derivate entsprechen somit den Formeln (10) bis (14) 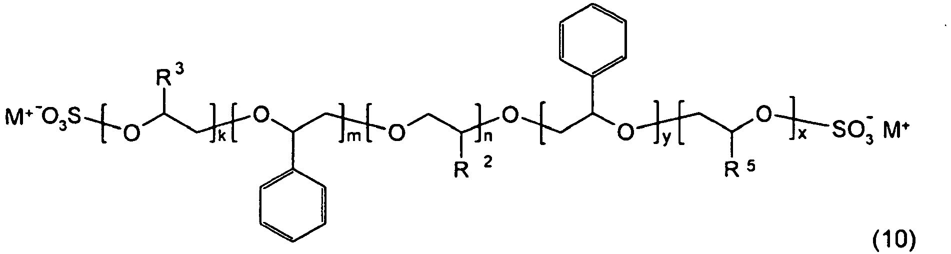 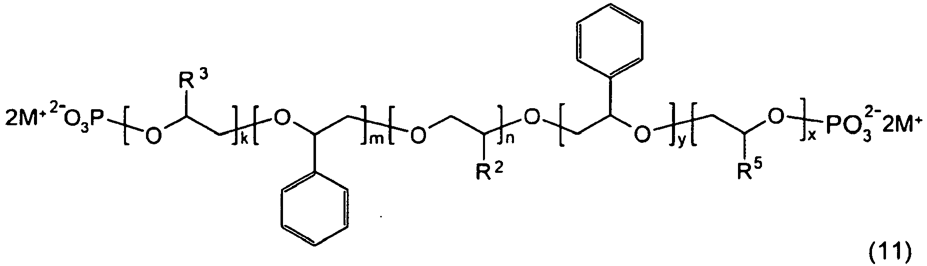 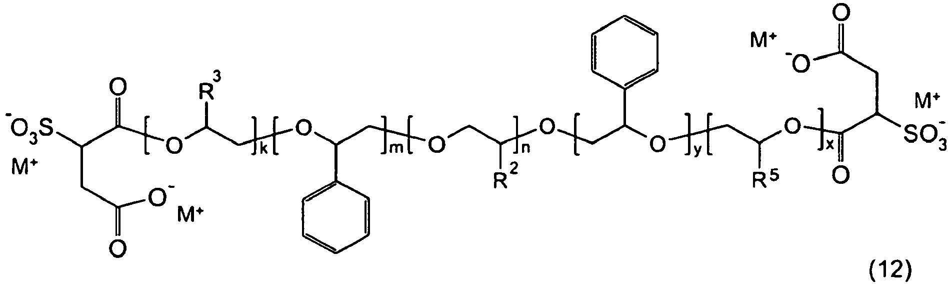 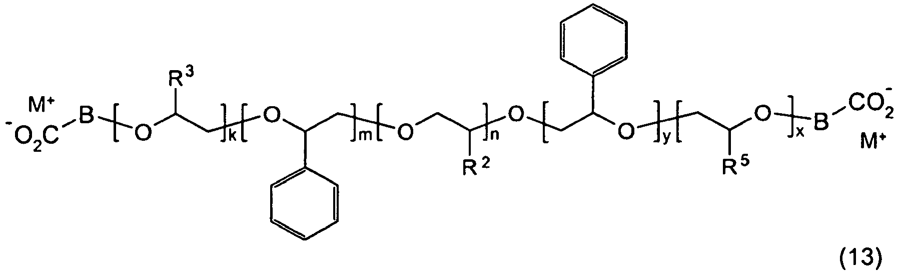 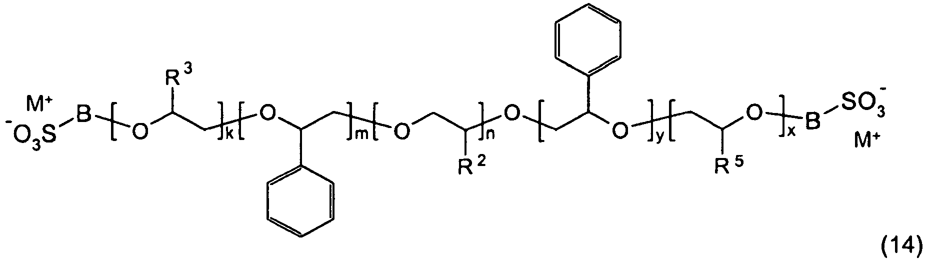 worin R¹, R², R³, R⁵, m, k, x, y und n die oben angegebene Bedeutung haben, M für ein Alkalimetallion, ein Ammoniumion oder für H⁺ und B für eine aliphatische oder aromatische Gruppe mit 1 bis 50 Kohlenstoffatomen, die auch Heteroatome enthalten kann, steht.

Die erfindungsgemäßen Teilester können dadurch hergestellt werden, dass man die Copolymere der Formel 1 mit geeigneten Säuren umsetzt. Es ist jedoch darauf zu achten, dass die Säuren nicht oxidierend wirken, da ansonsten eine Oxidation der Doppelbindung erfolgen kann. Aus diesem Grund wird die Herstellung von Sulfatteilestern vorzugsweise mit Amidosulfonsäure statt mit Schwefelsäure durchgeführt. Die dadurch erhaltenen Ammoniumsalze können durch Umsetzung mit Alkali-Hydroxiden in die entsprechenden Alkalisalze überführt werden. Für die Herstellung von Phosphorsäureteilestern kann Phosphorsäure verwendet werden. Organische Säuren können direkt, als Ester oder in Form ihrer Anhydride mit den Copolymeren der Formel 1 umgesetzt werden. Die Einfügung funktioneller Gruppen erfolgt vorzugsweise nach der Herstellung des Teilesters der nicht funktionalisierten Säure. So kann die Herstellung von Methacrylsäureestern, beispielsweise von solchen gemäß Formel 7, durch Direktveresterung oder Umesterung mit Methacrylsäure bzw. Methacrylsäuremethylester und die Herstellung von Sulfobernsteinsäureester, beispielsweise von solchen gemäß Formel 5, durch Herstellung der entsprechenden Maleinsäureester und der nachfolgenden Sulfonierung z.B. mit Pyrosulfiten erfolgen.

Die Herstellung der Sulfonsäuren, Carbonsäuren und Phosphonsäuren erfolgt durch Umsetzung der Copolymeren der Formel 1 mit den entsprechenden Alkanolen, Halogeniden oder cylischen Estern der Sulfon- oder Carbonsäuren.

Die erfindungsgemäßen Copolymere sind als copolymerisierbare Emulgatoren in der Emusionspolymerisation geeignet, wenn sie radikalisch polymerisierbare Gruppen, also vorzugsweise olefinisch ungesättigte Gruppen, enthalten. In der Verwendung als Emulgatoren in der Emulsionspolymerisation werden die erfindungsgemäßen Copolymere mit weiteren Monomeren polymerisiert, aus denen eine Polymerdispersion hergestellt werden soll. Zur Herstellung von Polymerdispersionen sind ungesättigte Monomere geeignet. Bevorzugte olefinisch ungesättigte Monomere sind beispielsweise
- Vinylmonomere, wie Carbonsäureester des Vinylalkohols, beispielsweise Vinylacetat, Vinylpropionat, Vinylether der Isononansäure oder der Isodecansäure,
- Arylsubstituierte Olefine, wie Styrol und Stilben
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Hydroxyethylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dopentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Acrylamidomethylpropansulfonsäure und ihre Alkali- und Ammonium-, Alkylammonium und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N-Methylacrylamid, N-Ethylacrylamid, N-Propylacrylamid, N-Methylolacrylamid sowie die entsprechenden Methacrylsäurederivate und Vinylmethylacetamid.

In einer bevorzugten Ausführungsform werden die oben genannten Monomere mit weiteren Comonomeren, vorzugsweise Olefinen oder halogenierten Olefinen mit 2 bis 8 Kohlenstoffatomen wie z.B. Ethylen, Propen, Butene, Pentene, 1,3-Butadien, Chloropren, Vinylchlorid, Vinylidenchlorid, Vinylidenfluorid und Tetrafluorethylen polymerisiert.

Zur Herstellung der Polymerdispersionen werden die mit Wasser nicht mischbaren Monomere im allgemeinen mit Hilfe der erfindungsgemäßen Copolymere in der wässrigen Phase in Form von Mizellen fein verteilt und die radikalische Polymerisationsreaktion durch Initiatoren wie beispielsweise Ammonium-,

Natrium- und Kaliumperoxodisulfat gestartet.

Weitere Hilfs- und Zusatzstoffe für die Verwendung mit den erfindungsgemäßen Copolymere können Schutzkolloide wie Carboxymethylcellulose, Hydroxyethylcellulose, Methylhydroxypropylcellulose, sowie teil- und vollverseifter Polyvinylalkohol sein.

Eine Übersicht über gängige Verfahren, Tenside und weitere Hilfsmittel der Emulsionspolymerisation geben Peter A. Lovell und Mohamed S. EI-Aasser, in "Emulsion Polymerization and Emulsion Polymers", erschienen bei John Wiley and Sons, 1997.

Die erfindungsgemäßen Copolymere werden im Reaktionsgefäß vor Beginn der Polymerisationsreaktion vorgelegt oder während der Polymerisationsreaktion dem Reaktionsgefäß zugegeben.

Im allgemeinen werden die erfindungsgemäßen Copolymere in Mengen von 0,1 bis 50, vorzugsweise 0,2 bis 10, insbesondere 0,4 bis 4 Gew.-%, bezogen auf das Gewicht der für die Herstellung der Polymerdispersion verwendeten, nicht oder wenig wasserlöslichen, olefinisch ungesättigten Monomere als Emulgatoren verwendet.

Die erfindungsgemäßen Copolymere können sowohl alleine als auch in Kombination mit anderen bereits bekannten anionischen und nichtionischen Emulgatoren des Standes der Technik verwendet werden, wie sie eingangs beschrieben wurden. Die Menge der anionischen und nichtionischen Emulgatoren des Standes der Technik beträgt dann vorzugsweise 0,001 bis 5, insbesondere 0,01 bis 1 % und besonders bevorzugt 0,02 bis 0,4 Gew.-% bezogen auf das Gewicht der nicht oder wenig wasserlöslichen olefinisch ungesättigte Monomere.

Die mit den erfindungsgemäßen Copolymeren hergestellten Polymerdispersionen zeigen eine geringe Koagulatbildung während und nach der Polymerisation und eine Verbesserung der Scher-, Temperatur- und Lagerstabilität, der Gefrier/Taustabilität und die Elektrolytstabilität gegenüber zwei- und dreiwertigen Kationen wie Calcium, Barium und Aluminium. Weiterhin ist ein Verbesserung der Filmeigenschaften der aus den Polymerdispersionen hergestellten Polymerfilme zu beobachten. Die mit den erfindungsgemäßen Copolymeren hergestellten Polymerdispersionen bilden Filme mit geringer Wasseraufnahme, einem geringen Weißanlauf bei Kontakt mit Wasser, einen kleinen Kontaktwinkel gegen Wasser und gute Nass- und Trockenreibechtheiten.

### Beispiele

### Herstellung von Copolymeren aus Alkylenoxiden und Styroloxid

### Beispiel 1: Monoethylenglykol-initiiertes Styroloxid-Propylenoxid-Copolymer

1 mol Monoethylenglykol wurde mit 0,1 mol Kaliummethanolat in einem Laborautoklaven partiell zum Alkoholat umgesetzt. Methanol wurde abdestilliert. Anschließend wurden 10 mol Styroloxid zugegeben und für 5 Stunden bei ca. 100°C unter Druck polymerisiert. Zu diesem Reaktionsprodukt wurden 20 mol Propylenoxid zugetropft, erneut 9 Stunden bei 130°C unter Druck polymerisiert. Nachdem das Propylenoxid vollständig abreagiert hatte, wurde das Produkt mittels NMR Spektroskopie und OH-Zahl-Bestimmung analysiert.

Die OH-Zahl war 54 mgKOH/g entsprechend einer mittleren Molmasse von 2080 g/mol, unter der Annahme von 2 freien OH-Gruppen pro Molekül Das NMR-Spektrum zeigte ein Verhältnis CHOH : aromatisches Styryl : CH₃-Propyl-Protonen von 1 : 23 : 28 entsprechend folgender Struktur mit m = 2,3 und k = 9,3:

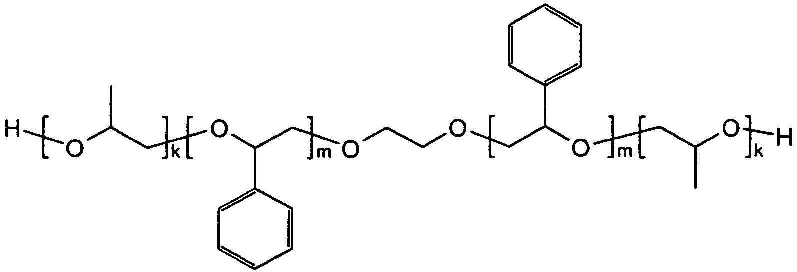

### Herstellung von Estern und Teilestern

### Beispiel 2

2010 g des Copolymers aus Beispiel 3 wurden unter Stickstoff zu 98 g Maleinsäureanhydrid bei 70°C zugetropft. Die Mischung wurde anschließend für 4 h auf 90°C erwärmt und zu einer Mischung aus 52 g Natriumpyrosulfit, 40 g NaOH und 2270 g dest. Wasser gegeben und für 5 h bei 80°C zur Reaktion gebracht. Es wurden 4470 g Sulfosuccinatlösung mit einem Gehalt von 50 Gew.-% erhalten.

## Patentansprüche

1. Copolymere der Formel (1) 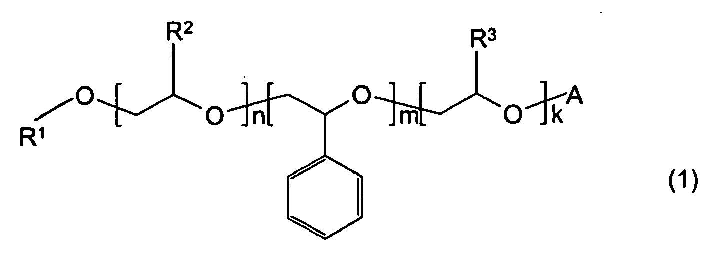 worin
R¹ Wasserstoff, einen C₁-C₅-Alkylrest oder C₂-C₅-Alkenylrest, die auch Heteroatome enthalten können, eine Säuregruppe oder eine aliphatische oder aromatische Gruppe mit 1 bis 50 Kohlenstoffatomen, die eine Säuregruppe trägt,
R² und R³ unabhängig voneinander Wasserstoff, Methyl und/oder Ethyl
n eine Zahl von 0 bis 100, und
m eine Zahl von 3 bis 30, und
k eine Zahl von 1 bis 200, und
A eine Copolymereinheit der Formel (2) 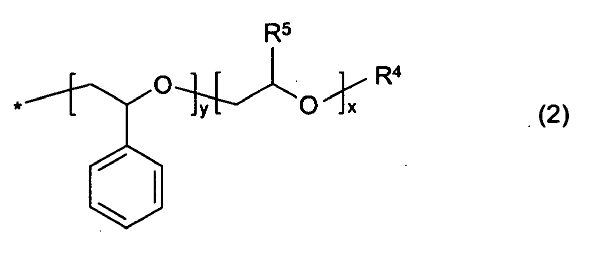
worin
R⁴ Wasserstoff, einen C₁-C₅-Alkylrest oder C₂-C₅-Alkenylrest, die auch Heteroatome enthalten können, eine Säuregruppe oder eine aliphatische oder aromatische Gruppe mit 1 bis 50 Kohlenstoffatomen, die eine Säuregruppe trägt,
R⁵ Wasserstoff, Methyl und/oder Ethyl
x eine Zahl von 0 bis 100, und
y eine Zahl von 3 bis 30,
bedeuten, wobei R¹ für Wasserstoff oder eine Säuregruppe steht.

2. Copolymere gemäß Anspruch 1, worin die Alkoxygruppen blockweise angeordnet sind.

3. Copolymere gemäß Anspruch 1 und/oder 2, worin k eine Zahl von 10 bis 100 bedeutet.

4. Copolymere gemäß einem oder mehreren der Ansprüche 1 bis 3, worin m eine Zahl von 3 bis 10 bedeutet.

5. Copolymere gemäß einem oder mehreren der Ansprüche 1 bis 4, worin n eine Zahl von 1 bis 5 bedeutet.

6. Copolymere gemäß einem oder mehreren der Ansprüche 1 bis 5, worin Formel 1 für einen Ester oder Teilester steht.

7. Copolymere gemäß einem oder mehreren der Ansprüche 1 bis 6, worin R¹ oder R⁴ eine C₂- bis C₅-Alkenylgruppe bedeuten.

8. Verwendung von Copolymeren gemäß einem oder mehreren der Ansprüche 1 bis 7 als Pigment- und Bitumenemulgator.

9. Verwendung von Copolymeren gemäß Anspruch 7 als Emulgator in der Emulsionspolymerisation.

## Claims

1. A copolymer of the formula (1) 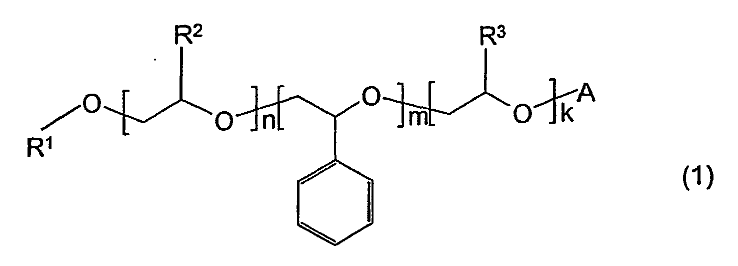 in which
R¹ is hydrogen, a C₁-C₅-alkyl radical, or C₂-C₅-alkenyl radical which may also contain hetero atoms, an acid group or an aliphatic or aromatic group having 1 to 50 carbon atoms, which carries an acid group,
R² and R³, independently of one another, are hydrogen, methyl and/or ethyl,
n is a number from 0 to 100, and
m is a number from 3 to 30, and
k is a number from 1 to 200, and
A is a copolymer unit of the formula (2) 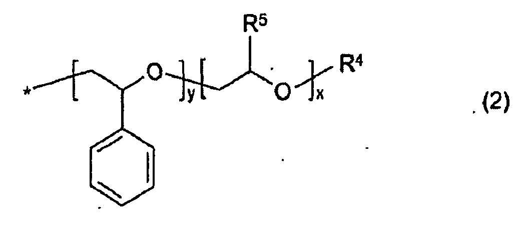
in which
R⁴ is hydrogen, a C₁-C₅-alkyl radical or C₂-C₅-alkenyl radical which may also contain hetero atoms, an acid group or an aliphatic or aromatic group having 1 to 50 carbon atoms, which carries an acid group,
R⁵ is hydrogen, methyl and/or ethyl,
x is a number from 0 to 100, and
y is a number from 3 to 30,
where R¹ is hydrogen or an acid group.

2. The copolymer as claimed in claim 1, wherein the alkoxy groups are arranged block by block.

3. The copolymer as claimed in claim 1 and/or 2, wherein k is a number from 10 to 100.

4. The copolymer as claimed in one or more of claims 1 to 3, wherein m is a number from 3 to 10.

5. The copolymer as claimed in one or more of claims 1 to 4, wherein n is a number from 1 to 5.

6. The copolymer as claimed in one or more of claims 1 to 5, wherein formula 1 represents an ester or partial ester.

7. The copolymer as claimed in one or more of claims 1 to 6, wherein R¹ or R⁴ is a C₂- to C₅-alkenyl group.

8. The use of a copolymer as claimed in one or more of claims 1 to 7 as pigment emulsifier and bitumen emulsifier.

9. The use of a copolymer as claimed in claim 7 as an emulsifier in emulsion polymerization.

## Revendications

1. Copolymères de formule (1) 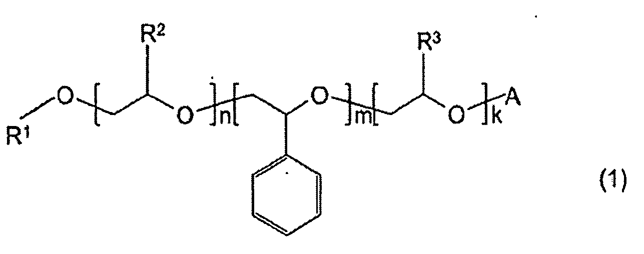 dans laquelle
R¹ signifie hydrogène, un radical alkyle en C₁-C₅ ou un radical alcényle en C₂-C₅, qui peuvent également contenir des hétéroatomes, un groupe acide ou un groupe aliphatique ou aromatique de 1 à 50 atomes de carbone, qui porte un groupe acide,
R² et R³ signifient indépendamment l'un de l'autre hydrogène, méthyle et/ou éthyle,
n signifie un nombre de 0 à 100, et
m signifie un nombre de 3 à 30, et
k signifie un nombre de 1 à 200, et
A signifie une unité copolymère de formule (2) 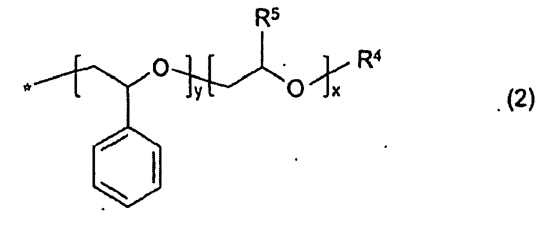 dans laquelle
R⁴ signifie hydrogène, un radical alkyle en C₁-C₅ ou un radical alcényle en C₂-C₅, qui peuvent également contenir des hétéroatomes, un groupe acide ou un groupe aliphatique ou aromatique de 1 à 50 atomes de carbone, qui porte un groupe acide,
R⁵ signifie hydrogène, méthyle et/ou éthyle,
x signifie un nombre de 0 à 100, et
y signifie un nombre de 3 à 30,
R¹ représentant l'hydrogène ou un groupe acide.

2. Copolymères selon la revendication 1, dans lesquels les groupes alcoxy sont agencés en blocs.

3. Copolymères selon la revendication 1 et/ou 2, dans lesquels k signifie un nombre de 10 à 100.

4. Copolymères selon une ou plusieurs des revendications 1 à 3, dans lesquels m signifie un nombre de 3 à 10.

5. Copolymères selon une ou plusieurs des revendications 1 à 4, dans lesquels n signifie un nombre de 1 à 5.

6. Copolymères selon une ou plusieurs des revendications 1 à 5, dans lesquels la formule 1 représente un ester ou un ester partiel.

7. Copolymères selon une ou plusieurs des revendications 1 à 6, dans lesquels R¹ ou R⁴ signifie un groupe alcényle en C₂ à C₅.

8. Utilisation de copolymères selon une ou plusieurs des revendications 1 à 7 en tant qu'émulsifiant de pigments et de bitumes.

9. Utilisation de copolymères selon la revendication 7 en tant qu'émulsifiant dans la polymérisation en émulsion.
